# EUROPÄISCHE PATENTANMELDUNG

(11) **EP 0 751 274 A1**
(43) Veröffentlichungstag der Anmeldung: **02.01.1997**
(21) Anmeldenummer: 96109753.2
(22) Anmeldetag: 17.06.1996
(51) Int. Cl.: E05F 15/00

(54) **Stellantrieb**

(30) Priorität: 30.06.1995 DE 29510688 U; 14.09.1995 DE 29514786 U
(71) Anmelder: SIEMENS AKTIENGESELLSCHAFT, 80333 München (DE)
(72) Erfinder: Redelberger, Harald, Dipl.-Ing., 97273 Kürnach (DE)

(57) **Zusammenfassung**

Um bei einem fremdkraftbetätigten Fensterheber- bzw. Schiebedach-Stellantrieb in einem Kraftfahrzeug auf einfache Weise einen den Sicherheitsvorschriften entsprechenden Einklemmschutz durch eine definierte Schließkraftbegrenzung gewährleisten zu können, wird vorgeschlagen:
Die Verstellgeschwindigkeit des Stellantriebes ist in Abhängigkeit vom Hubweg (H) des Fenster- bzw. Schiebedaches derart reduzierbar, daß bei Anlauf gegen ein Hindernis die Gesamtbelastung einschließlich der gespeicherten kinetischen Energie des gesamten Antriebssystems jeweils höchstens der maximal zulässigen Schließkraft entspricht.

## Beschreibung

Die Erfindung bezieht sich auf einen Stellantrieb gemäß Anspruch 1.

Stellantriebe der vorgenannten Art werden insbesondere für Fensterheberantriebe bzw. Schiebedachantriebe in Kraftfahrzeugen eingesetzt und enthalten üblicherweise einen Elektromotor, insbesondere einen Kommutatormotor, dessen verlängerte Rotorwelle als Schneckenwelle in ein an das Motorgehäuse anschließendes Getriebegehäuse ragt und dort ein Schneckenrad antreibt, das über einen Mitnehmer mit einem Hebermechanismus der Fensterscheibe bzw. des Schiebedaches in Antriebsverbindung steht; ein derartiger Stellantrieb ist z.B. durch die DE-U 89 03 714 bekannt.

Für einen wirksamen Einklemmschutz zwischen dem durch Fremdkraftbetätigung schließenden Fenster bzw. Schiebedach und einem zur Gegenanlage kommenden Hindernis sind in zunehmenden Maße strengere Vorschriften, insbesondere gemäß der amerikanischen gesetzlichen Vorschrift FMVSS118, zu erfüllen; entsprechend diesen Vorschriften muß u.a. der Schließvorgang abgebrochen bzw. das Fenster, die Trennwand oder das Dachteilsystem in umgekehrter Bewegungsrichtung angetrieben werden, wenn es/sie eine Kraft von 100 Newton oder mehr ausübt auf eine halbstarre, zylindrische Stange mit einem Durchmesser von 4mm bis 200mm, die ein bestimmtes Kraftdurchbiegungsmaß aufweist und die als Hindernis durch die Fenster-, Trennwand- oder Dachteilsystemöffnung an irgendeiner Stelle durchgeschoben wird. Die Federrate bzw. das Kraftfdurchbiegungsmaß der Prüfungsstange beträgt gemäß der vorgenannten amerikanischen gesetzlichen Vorschrift mindestens 65 Newton/mm für eine Stange mit einem Durchmesser von 25mm und weniger und mindestens 20 Newton/mm für eine Stange mit einem Durchmesser von mehr als 25mm.

Durch die DE-A1-37 36 400 ist es bekannt, zum Zwecke einer augenblicklichen Unterbrechung bzw. Umkehrung des Antriebes beim Einklemmen eines Gegenstandes die Verstellgeschwindigkeit beim Schließen im gefährdeten Bereich zu verringern und anschließend wieder zu erhöhen.

Gemäß Aufgabe vorliegender Erfindung soll ein Stellantrieb geschaffen werden, der auf einfache Weise einerseits eine möglichst zügige Schließbewegung eines fremdkraftbetätigten Fensters oder dergleichen erlaubt und andererseits eine den behördlichen bzw. den gesetzlichen Vorschriften entsprechende Schließkraftbegrenzung gewährleistet. Die Lösung dieser Aufgabe gelingt durch einen Stellantrieb gemäß Patentanspruch 1; vorteilhafte Ausgestaltungen der Erfindung sind jeweils Gegenstand der Unteransprüche.

Bei dem erfindungsgemäßen Stellantrieb ist es möglich, einerseits in den oder bis kurz vor Erreichen bzw. nach Verlassen der keinen Sicherheitsvorschriften unterworfenen Hubweg-Bereichen die Fensterscheibe bzw. die Trennwand bzw. das Dachteil mit optimaler maximaler Geschwindigkeit mittels der Fremdkraftbetätigung zu bewegen und andererseits in den einer Schließkraftbegrenzung unterworfenen Hubweg-Bereichen durch entsprechende Anpassung der Geschwindigkeit des Stellantriebes über die Steuereinrichtung zu erreichen, daß die Antriebskraft des Stellantriebes selbst und die gesamte im bewegten System enthaltene Überschußenergie beim Anfahren des Hindernisses und z.B. anschließenden Umschalten in die Gegenbewegungsrichtung die in diesem Fall maximal zulässige Druckbelastung im Sinne einer vorgeschriebenen Schließkraftbegrenzung nicht übersteigt.

Zur einfachen und schnellen Drehzahlanpassung wird vorzugsweise eine pulsweitenmodulierte Speisespannung im Sinne der jeweils notwendigen Drehzahl des Elektromotors und damit der Verstellgeschwindigkeit des Stellantriebes dem Antriebsmotor des Stellantriebes zugeführt. Im Sinne einer möglichst schnellen und genauen Positionserfassung, d.h. des Hubweges der Fensterscheibe, ist ein mittelbar bzw. unmittelbar mit der Rotorwelle des Elektromotors des Stellantriebes in Einstellabhängigkeit stehender Drehzahl- bzw. Positionssensor mit einem eine hohe Auflösung gewährleistenden rotorseitigen weichmagnetischen Zahnrad und statorseitigem Dauermagneten zum Aufbau eines durch das Zahnrad beeinflußbaren Magnetfeldes sowie ein Hallwandler, insbesondere Differenz-Hallwandler, als die drehzahl- und gegebenenfalls drehrichtungsproportionalen Schwankungen des Magnetfeldes erfassender Sensor vorgesehen.

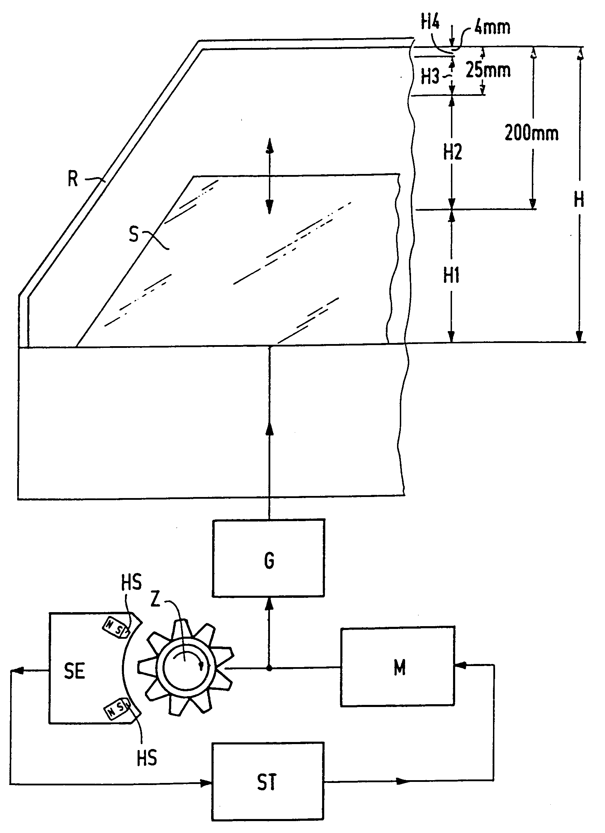

Die Erfindung sowie weitere vorteilhafte Ausgestaltungen der Erfindung gemäß Merkmalen der Unteransprüche werden im folgenden anhand eines in der Zeichnung schematisch dargestellten Ausführungsbeispiels näher erläutert.

Die Figur zeigt einen Tür- bzw. Fensterrahmen R mit einer bis zur etwa hälftigen Schließ- bzw. Öffnungsstellung fremdbetätigten Fensterscheibe S. Zur fremdkraftbetätigten Hub- bzw. Senkbewegung der Fensterscheibe S ist ein Stellantrieb mit einer Elektromotor-Getriebe-Antriebseinheit mit einem Kommutatormotor M sowie einem nachgeschalteten Schneckengetriebe G vorgesehen. Der Kommutatormotor M steht, insbesondere hinsichtlich seiner Drehzahlstellung in Einstellabhängigkeit von einer Steuervorrichtung ST, die zur Veränderung der Drehzahl des Kommutatormotors M eine Pulsweitenmodulierung für die Speisespannung des Elektromotors M aufweist. Die jeweilige Hubweg-Position und gegebenenfalls Hubweg-Richtung der Fensterscheibe S werden aus der Rotorposition des Kommutatormotors M aufgrund einer erstmaligen festgehaltenen Initialisierungsposition in der Öffnungs-Endstellung bzw. Schließ-Endstellung und einer anschließenden inkrementalen Rotationserfassung der Rotorwelle über den Drehzahl- bzw. Positionssensor SE in der Steuervorrichtung ST erfaßt.

Um eine hohe Auflösung bei der Positionserfassung und damit eine schnelle Geschwindigkeitsanpassung des Stellantriebes in Abhängigkeit vom jeweiligen Hubweg H der Fensterscheibe S in ihrem Hubbereich zwischen einer unteren Öffnungs-Endstellung und einer oberen Schließ-Endstellung gewährleisten zu können, ist als Drehzahl- bzw. Positionsgeber für das Sensorelement SE statorseitig ein hochpoliges weichmagnetische Zahnrad Z vorgesehen, durch das bei Drehung das Magnetfeld eines statorseitigen Dauermagneten N;S pulsweise verändert wird; als Drehzahl- bzw. Positionsempfänger für eine derartige Pulsung dient zumindest ein Hallsensor HS, insbesondere ein Differenz-Hallsensor. Der Dauermagnet N;S ist vorzugsweise mit dem Hallsensor HS fest verbunden.

Den eingangs genannten Sicherheitsvorschriften der amerikanischen Gesetzgebung FMVSS118 entsprechend umfaßt der gesamte Hubweg H zwischen der unteren Öffnungs-Endstellung und der oberen Schließ-Endstellung der Fensterscheibe S Hubweg-Zwischenbereiche H2 bzw.H3, in denen eine unterschiedliche Schließkraftbegrenzung vorgegeben ist. Im ersten Hubweg-Zwischenbereich H2, z.B. im Sinne der US-Sicherheitsvorschrift 200mm bis 25mm vor der Schließ-Endstellung, ist die Schließkraft z.B. auf unter 100 Newton bei einer Federrate von z.B. 20 Newton/mm eines eingeklemmten Gegenstandes zu begrenzen. Im zweiten Hubweg-Zwischenbereich H3, im Bereich von z.B. 25mm bis 4mm vor Erreichen der Schließ-Endstellung, ist gemäß der gleichen Vorschrift die Schließkraft auf z.B. 100 Newton bei einer Federrate von z.B. 65 Newton/mm des eingeklemmten Gegenstandes zu begrenzen.

Eine besonders aufwandsarme Erfüllung dieser Sicherheitsvorschriften hinsichtlich einer vorgeschriebenen Schließkraftbegrenzung kann dadurch erreicht werden, daß für den gesamten Hubweg-Zwischenbereich H2 bzw.H3 eine Verstellgeschwindigkeit im Sinne einer Schließkraft vorgesehen ist, die kleiner als die maximal zulässige Schließkraft ist; die Abschaltung bzw. Reversierung des Stellantriebes kann anschließend aufgrund einer Stillstandserkennung des Stellantriebes durch die Steuervorrichtung ST erfolgen. Eine individuellere Anpassung bei gleichzeitig insgesamt schnellerem Schließvorgang ist dadurch möglich, daß die Verstellgeschwindigkeit des Stellantriebes in jedem Hubweg-Zwischenbereich H2 bzw.H3 individuell im Sinne der jeweils vorgeschbriebenen maximalen Schließkraftbegrenzung reduziert ist.

In Anpassung an die vorgenannte US-Norm ist nach einer Ausgestaltung der Erfindung die Verstell-Geschwindigkeit des Stellantriebes in dem gesamten Hubweg-Zwischenbereich H2;H3 im Sinne einer Schließkraftbegrenzung mit maxmial 100 Newton bei Anlauf des Fensters gegen ein feststehendes Hindernis mit einer Federrate von ca. 65 Newton/mm, d.h. entsprechend der vorgeschriebenen Schließkraft-Begrenzung für den schließendstellungsnahen zweiten Hubweg-Zwischenbereich H3 definiert. Eine noch weiter individuell anpaßbare und insbesondere hinsichtlich einer optimalen Schließgeschwindigkeit verbesserter Stellantrieb ist in Anpassung an die vorgenannte US-Norm gemäß dem gezeigten Ausführungsbeispiel dadurch möglich, daß die Verstellgeschwindigkeit des Stellantriebes in dem ersten Hubweg-Zwischenbereich H2 im Sinne einer Schließkraftbegrenzung von 100 Newton bei Anlauf des Fensters gegen ein feststehendes Hindernis mit einer Federrate von ca. 25 Newton/mm und in dem zweiten Hubweg-Zwischenbereich H3 im Sinne einer Schließkraftbegrenzung von 100 Newton bei Anlauf des Fensters gegen ein feststehendes Hindernis mit einer Federrate von ca. 65 Newton/mm reduziert ist.

In den übrigen Hubweg-Bereichen H1;H4 außerhalb der vorgenannten, einer Schließkraftbegrenzung unterworfenen Hubweg-Zwischenbereichen - d.h. insbesondere im Hubbereich H1 unmittelbar nach der ersten Öffnungs-Endstellung als auch im Hubbereich H4 unmittelbar vor der zweiten Schließ-Endstellung - steht der Stellantrieb zweckmäßigerweise in Abhängigkeit von der Steuervorrichtung im Sinne einer maximalen Verstellgeschwindigkeit.

Während somit in den beiden äußeren endstellungsnahen Hubbereichen H1 bzw.H4 die pulsweitenmodulierte Steuervorrichtung für die Motorspannung des Kommutatormotors M vorzugsweise im Sinne einer Modulation von 100% dauernd durchgesteuert ist, wird in den einer Schließkraftbegrenzung unterworfenen Hubweg-Zwischenbereich H2 bzw.H3 durch entsprechende Taktung der pulsweitenmodulierten Motorspannung eine Reduzierung der Drehzahl der Rotorwelle des Kommutatormotors M und damit der Verstellgeschwindigkeit des Stellantriebes vorgesehen. Zweckmäßigerweise erfolgt dabei auch eine Regelung der Motordrehzahl derart, daß Schwankungen in der Versorgungsspannung bzw. unterschiedliche Reibungs- bzw. Temperaturverhältnisse im Sinne einer weitgehend konstanten optimalen Geschwindigkeit für die Bewegung der Fensterscheibe erfolgen kann.

## Patentansprüche

1. Stellantrieb, insbesondere Elektromotor-Getriebe-Antriebseinheit (M;G), zur Bewegung von fremdkraftbetätigten Fenstern (S), Trennwänden oder Dachteilsystemen in Kraftfahrzeugen über einen Hubweg (H) zwischen einer ersten Öffnungs-Endstellung und einer zweiten Schließ-Endstellung und zumindest einem Hubweg-Zwischenbereich (H2;H3) mit einer durch Sicherheitsvorschriften definierten Schließkraftbegrenzung bei Anlauf gegen ein Hindernis mit dem Merkmal:
a) Der Stellantrieb ist über eine Steuervorrichtung (ST) in Abhängigkeit von einer Positionserfassung des Hubweges (H) im Sinne einer derartigen Reduzierung seiner Verstell-Geschwindigkeit in dem Hubweg-Zwischenbereich (H2;H3) mit einer Schließkraftbegrenzung gestellt, daß bei Anlauf gegen ein Hindernis die Antriebskraft des Stellantriebes und die Andruckkraft aufgrund der gespeicherten kinetischen Energie des gesamten Antriebssystems die jeweils maximal zulässige Schließkraft nicht überschreitet;
b) der Stellantrieb steht in Abhängigkeit von der Steuervorrichtung (ST) im Sinne einer erhöhten Verstellgeschwindigkeit in einem ersten Hubweg-Bereich (H1) nach der Öffnungs-Endstellung und in einem letzten Hubweg-Bereich (H4) unmittelbar vor der Schließ-Endstellung sowie einer im Sinne der definierten Schließkraftbegrenzung reduzierten Verstellgeschwindigkeit in einem Hubweg-Zwischenbereich (H2;H3).

2. Stellantrieb nach Anspruch 1 mit dem Merkmal:
c) Der Hubweg-Zwischenbereich (H2;H3) ist unterteilt in zumindest einen ersten öffnungsstellungsnahen Hubweg-Zwischenbereich (H2) mit einer Schließkraftbegrenzung relativ zu einem gegendruckenden Prüfling, insbesondere einer Prüfstange, mit einer ersten Federrate und in einen zweiten schließstellungsnahen Hubweg-Zwischenbereich (H3) mit einer Schließkraftbegrenzung relativ zu einem gegendrückenden Prüflinge insbesondere einer Prüfstange, mit einer zweiten, gegenüber der ersten größeren Federrate.

3. Stellantrieb nach Anspruch 2 mit dem Merkmal:
d) Die Verstell-Geschwindigkeit des Stellantriebes ist in dem gesamten Hubweg-Zwischenbereich (H3;H3) im Sinne der vorgeschriebenen maximalen Schließkraftbegrenzung reduziert.

4. Stellantrieb nach Anspruch 2 mit dem Merkmal:
e) Die Verstellgeschwindigkeit des Stellantriebes ist in jedem Hubweg-Zwischenbereich (H2 bzw.H3) individuell im Sinne der jeweils vorgeschriebenen maximalen Schließkraftbegrenzung reduziert.

5. Stellantrieb nach zumindest einem der Ansprüche 1-3 mit den Merkmalen:
f) Der erste Hubweg-Zwischenbereich (H2) erstreckt sich von ca. 200mm bis ca. 25mm vor der Schließ-Endstellung und der zweite Hubweg-Zwischenbereich (H3) erstreckt sich von ca. 25mm bis ca. 4mm vor Erreichen der Schließ-Endstellung;
g) die Verstell-Geschwindigkeit des Stellantriebes ist in dem gesamten Hubweg-Zwischenbereich (H2;H3) im Sinne einer Schließkraftbegrenzung bis maximal 100 Newton bei Anlauf des Fensters, der Trennwand oder des Dachleitsystems gegen ein feststehendes Hindernis mit einer Federrate (Kraftdurchbiegungsmaß) von ca. 65 Newton/mm reduziert.

6. Stellantrieb nach zumindest einem der Ansprüche 1-3 mit den Merkmalen:
h) Der erste Hubweg-Zwischenbereich (H2) erstreckt sich von ca. 200mm bis ca. 25mm vor der Schließ-Endstellung und der zweite Hubweg-Zwischenbereich (H3) erstreckt sich von ca. 25mm bis ca. 4mm vor Erreichen der Schließ-Endstellung;
i) die Verstell-Geschwindigkeit des Stellantriebes ist in dem ersten Hubweg-Zwischenbereich (H2) im Sinne einer Schließkraftbegrenzung von 100 Newton bei Anlauf des Fensters, der Trennwand oder des Dachteilsystems gegen ein feststehendes, insbesondere zylinderförmiges, Hindernis mit einer Federrate (Kraftdurchbiegungsmaß) von ca. 20 Newton/mm und in dem zweiten Hubweg-Zwischenbereich (H3) im Sinne einer Schließkraftbegrenzung von 100 Newton bei Anlauf des Fensters, der Trennwand oder des Dachteilsystems gegen ein festehendes, insbesondere zylinderförmiges, Hindernis mit einer Federrate (Kraftdurchbiegungsmaß) von ca. 65 Newton/mm reduziert.

7. Stellantrieb nach zumindest einem der vorhergehenden Ansprüche mit dem Merkmal:
j) Die Steuervorrichtung (ST) enthält eine Pulsweiten-Modulierung für die Speisespannung des Elektromotors (M), vorzugsweise Gleichstrommotors, zur Veränderung der Geschwindigkeit des Stellantriebes.

8. Stellantrieb nach zumindest einem der vorhergehenden Ansprüche mit dem Merkmal:
k) Die Positionserfassung des Hubweges (H) steht in Abhängigkeit von einem Drehzahl- bzw. Positionssensor (SE) des Stellantriebes, insbesondere einem der Rotorwelle des Elektromotors (M) des Stellantriebes zugeordneten Drehzahl- bzw. Positionssensors (SE).

9. Stellantrieb nach dem vorhergehenden Anspruch mit dem Merkmal:
l) Der Drehzahl- bzw. Positionssensor (SE) enthält als wesentliche Bestandteile zumindest ein rotorseitiges weichmagnetisches Zahnrad (Z) sowie statorseitig einen Permanentmagneten (N;S) sowie zumindest einen Hallsensor (HS), insbesondere zumindest einen Differenz-Hallsensor.
